# EUROPEAN PATENT APPLICATION

(11) **EP 4 328 269 A1**
(43) Date of publication of application: **28.02.2024**
(21) Application number: 21961534.1
(22) Date of filing: 10.12.2021
(51) Int. Cl.: C08L 67/02, C08L 67/04, C08L 23/26, C08J 5/18

(54) **RESIN COMPOSITION AND BIODEGRADABLE RESIN MOLDED PRODUCT COMPRISING SAME**

(30) Priority: 18.10.2021 KR 20210138485
(71) Applicant: LG Chem, Ltd., Seoul 07336 (KR)
(72) Inventor: CHOI, Wooseon, Daejeon 34122 (KR); JEONG, Byeong Joon, Daejeon 34122 (KR); JANG, Se Young, Daejeon 34122 (KR); CHOI, Young Hyun, Daejeon 34122 (KR)
(74) Representative: Goddar, Heinz J.
(86) International application number: PCT/KR2021/018739
(87) International publication number: WO 2023/068447

(57) **Abstract**

Provided is a resin composition that includes a polybutylene adipate terephthalate (PBAT), a polylactic acid (PLA), and a maleic anhydride modified polyolefin elastomer, and a biodegradable resin molded article comprising the same. The resin composition includes a biodegradable polyester, and thereby can provide a resin product such as a hot sealing film or a hot sealing bag that is excellent in biodegradability and can realize high seal strength even at low temperatures during hot sealing.

## Description

### Cross-reference to Related Applications

This application is a National Stage Application of International Application No. PCT/KR2021/018739 filed on December 10, 2021, which is based on, and claims priority from, Korean Patent Application No. 10-2021-0138485, filed on October 18, 2021, the disclosure of which is hereby incorporated by reference herein in its entirety.

### TECHNICAL FIELD

The present disclosure relates to a resin composition and a biodegradable resin molded article comprising the same.

### BACKGROUND

Thermoplastic polymer resin is excellent in mechanical and chemical properties, and thus is used in various fields such as drinking water containers, medical applications, food wrapping paper, food containers, sheets, films, vehicle molded articles, agricultural vinyl, and the like.

The thermoplastic polymer resin, particularly a polyethylene film or the like, is often used as a hot sealing bag for food packaging, a mulching film for use in agriculture, and the like because they have excellent mechanical properties and are continuously deformable by applying heat while being harmless to the human body.

A hot sealing bag for food packaging is often used for vacuum packaging food, and the like, and a polyethylene film or the like capable of achieving excellent bonding strength even at a low sealing temperature is often used.

The agricultural film is often used in mulching method in agriculture. Mulch refers to a material used to cover the surface of the soil when cultivating crops. Covering the top surface of the soil with various types of materials can block the growth of weeds, prevent pests, thereby reducing the use of pesticides. Moreover, the temperature of the soil can be easily controlled, and beneficial bacteria in the soil can be grown, soil erosion can be prevented and soil moisture can be maintained.

Examples of such mulching materials include leaves of crops such as rice straw and grass, polyolefin-based films, and the like, but generally, a synthetic resin such as a polyethylene film is often used.

However, as described above, polyethylene films, which are often used as hot sealing bags for food packaging or mulching materials, are not decomposed in a natural environment, and has a limit in recycling. In particular, recently, a phenomenon is known in which discarded plastics, such as polyethylene films, flow into the sea, and are crushed into fine plastics having a very small size by reflux in sea or sunlight.

Currently, it is known that these fine plastics are floating in an uncountable amount ranging from billions to tens of billions in the sea, which flow into the body of sea creatures, accumulates in ecosystems, and affects the entirety of food chains.

Therefore, there is a need to study alternative materials for thermoplastics that have previously been used.

In order to solve these problems, in recent years, active attempts have been made to develop a mulching film made of a photodegradable or biodegradable polymer, but there is a problem that the biodegradability is not yet sufficient, and the mechanical properties do not reach those of the existing polyethylene film.

### BRIEF DESCRIPTION

### Technical Problem

It is one object of the present disclosure to provide a biodegradable resin composition for a resin product that can realize high sealing strength even at low temperatures during hot sealing.

It is another object of the present disclosure to provide a biodegradable resin molded article comprising the above-mentioned resin composition.

### Technical Solution

According to one aspect of the present disclosure, provided is a resin composition comprising: a polybutylene adipate terephthalate (PBAT), a polylactic acid (PLA), and a maleic anhydride modified polyolefin elastomer.

According to an embodiment of the present disclosure, the maleic anhydride modified polyolefin elastomer can be an ethylene-alpha olefin copolymer grafted with maleic anhydride.

According to an embodiment of the present disclosure, the ethylene-alpha olefin copolymer can be one or more selected from the group consisting of ethylene-1-butene copolymer, ethylene-1-pentene copolymer, ethylene-1-hexene copolymer, ethylene-1-heptene copolymer, and ethylene-1-octene copolymer.

According to an embodiment of the present disclosure, the resin composition can contain the polylactic acid in an amount of 1 part by weight to 50 parts by weight, or 10 part by weight to 30 parts by weight, based on 100 parts by weight of the polybutylene adipate terephthalate (PBAT).

According to an embodiment of the present disclosure, the resin composition can contain the maleic anhydride modified polyolefin elastomer in an amount of 0.01 part by weight to 10 parts by weight, or 0.1 part by weight to 5 parts by weight, or 0.1 part by weight to 1 part by weight, based on 100 parts by weight of a total of the polybutylene adipate terephthalate (PBAT) and polylactic acid.

According to an embodiment of the present disclosure, the resin composition can contain the maleic anhydride modified polyolefin elastomer in an amount of 0.01 part by weight to 10 parts by weight, or 0.1 part by weight to 5 parts by weight, based on 100 parts by weight of the polybutylene adipate terephthalate (PBAT).

According to an embodiment of the present disclosure, the maleic anhydride modified polyolefin elastomer preferably can have a melting point of 40°C to 60°C, and a freezing point of 20°C to 35°C, as measured according to ASTM D3418 standards.

According to an embodiment of the present disclosure, the maleic anhydride modified polyolefin elastomer can have a melt index value of about 1.3 g/lOmin to about 2.0 g/lOmin, more preferably about 1.5 g/lOmin to about 2.0 g/lOmin, or more than about 1.5 g/lOmin and about 2.0 g/lOmin or less as measured at 190°C and 21.6 kg according to ASTM D1238 standards.

According to an embodiment of the present disclosure, the maleic anhydride modified polyolefin elastomer has a maleic anhydride graft ratio of more than 0 wt.% and less than 1 wt.%, or about 0.1 wt.% to 0.9 wt.%, or about 0.3 wt.% to 0.7 wt.%.

On the other hand, according to another aspect of the present disclosure, provided is a biodegradable resin molded article comprising the above-mentioned resin composition.

Further, the biodegradable resin molded article can be a biodegradable film.

According to an embodiment of the present disclosure, the biodegradable resin molded article can have a tensile strength value of about 250 kgf/cm² to about 500 kgf/cm², or about 250 kg/cm² to about 400 kg/cm², or about 300 kg/cm² to about 400 kg/cm², or about 350 kg/cm² to about 380 kg/cm², as measured according to ISO 527 standards.

According to an embodiment of the present disclosure, the biodegradable resin molded article can have an elongation value of about 200% to about 600%, or about 300% to about 500%, or about 300% to 400%, as measured according to ISO 527 standards.

Further, the biodegradable resin molded article can be a hot sealing film.

According to an embodiment of the present disclosure, the biodegradable resin molded article can have a hot seal initiation temperature value of about 80°C to about 120°C, or about 100°C to about 120°C, or about 105°C to about 115°C, or about 105°C to about 110°C, as measured under 2N according to ASTM F1921 standards.

According to an embodiment of the present disclosure, the biodegradable resin molded article can have a seal strength value of about 2N or more, or about 2N to about 10N, or about 2.5N to about 5N, as measured at 110°C according to ASTM F1921 standards.

According to an embodiment of the present disclosure, the biodegradable resin molded article can have a seal strength value of about 3N or more, or about 3N to about 10N, or about 4N to about 5N, as measured at 114°C according to ASTM F1921 standards.

The technical terms used herein is for the purpose of describing exemplary embodiments only and is not intended to limit the scope of the invention.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" or "above" layers or elements, it means that the layer or element is directly formed on the layers or elements, or it means that other layers or elements can be additionally formed between the layers, on a subject, or on a substrate.

Although the present disclosure can have various forms and various modifications can be made thereto, specific examples will be exemplified and explained in detail. However, it is not intended to limit the present disclosure to disclosed forms, and it should be understood that all the modifications, equivalents or substitutions within the idea and technical scope of the present disclosure are included in the present disclosure.

### DETAILED DESCRIPTION

Now, the present disclosure will be described in more detail.

The present inventors have found that when a maleic anhydride modified polyolefin elastomer is used in a blending resin blended with polybutylene adipate terephthalate (PBAT) and polylactic acid (PLA), the mechanical properties such as elongation and tensile strength are very excellent, and the high bonding strength can be realized even at low temperatures during hot sealing, thereby completing the present disclosure.

A resin composition according to an embodiment of the present disclosure includes a polybutylene adipate terephthalate (PBAT), a polylactic acid (PLA), and a maleic anhydride modified polyolefin elastomer.

The polyester-based resins are excellent in mechanical and chemical properties and thus are used in various industrial fields. Among them, since polybutylene adipate terephthalate (PBAT) is a soft polyester and is biodegradable, it is attracting attention as an alternative to polyolefin-based polymers mainly used for packaging materials and agricultural films.

However, in order to use soft PBAT alone for the corresponding application, the mechanical properties of PBAT are slightly insufficient and thus, PBAT is mainly used by blending with a light polylactic acid (PLA); PBAT is used alone but used by compounding an organic filler such as carbon black.

However, since PBAT and PLA have very low compatibility, a compatibilizer must be used during blending.

Therefore, the resin composition according to an aspect of the present disclosure includes a maleic anhydride modified polyolefin elastomer as a compatibilizer component.

According to an embodiment of the present invention, the maleic anhydride modified polyolefin elastomer can be an ethylene-alpha olefin copolymer grafted with maleic anhydride.

The ethylene-alpha olefin copolymer grafted with maleic anhydride can increase the compatibility of PBAT and PLA due to its molecular structural aspect, whereby the resin composition according to an aspect of the present disclosure can achieve very high elongation and tensile strength, and at the same time, realize high bonding strength even at a low temperature during hot sealing.

According to an embodiment of the present disclosure, the ethylene-alpha olefin copolymer can be one or more selected from the group consisting of ethylene-1-butene copolymer, ethylene-1-pentene copolymer, ethylene-1-hexene copolymer, ethylene-1-heptene copolymer, and ethylene-1-octene copolymer. Among them, it can be most preferable to use an ethylene-1-octene copolymer and an ethylene-1-octene copolymer grafted with maleic anhydride as a compatibilizer, but the present disclosure is not necessarily limited thereto.

According to an embodiment of the present disclosure, the resin composition can contain the polylactic acid in an amount of about 1 part by weight to about 50 parts by weight, or about 10 parts by weight to about 30 parts by weight, based on 100 parts by weight of the polybutylene adipate terephthalate (PBAT).

When polylactic acid is contained in an excessively small amount, the effect for improving the mechanical properties of PBAT may not appear, and when polylactic acid is contained in an excessively large amount, there may be a problem that hardness is increased and thus, the elongation rate is lowered.

According to one embodiment of the present disclosure, the resin composition can contain the maleic anhydride modified polyolefin elastomer in an amount of about 0.01 to about 10 parts by weight, or about 0.1 part by weight to about 5 parts by weight, or about 0.1 to about 1 part by weight, based on 100 parts by weight of a total of the polybutylene adipate terephthalate (PBAT) and polylactic acid.

Further, the resin composition can contain the maleic anhydride modified polyolefin elastomer in an amount of about 0.01 part by weight to about 10 parts by weight, or about 0.1 part by weight to about 5 parts by weight, based on 100 parts by weight of the polybutylene adipate terephthalate (PBAT).

When the maleic anhydride modified polyolefin elastomer is contained in an excessively small amount, there can be a problem that the compatibility of PBAT and PLA is reduced, and blending is not performed. When the maleic anhydride modified polyolefin elastomer is contained in an excessively large amount, there can be a problem that the mechanical properties and biodegradability are reduced.

According to one embodiment of the present disclosure, the maleic anhydride modified polyolefin elastomer preferably can have a melting point of 40°C to 60°C, and a freezing point of 20°C to 35°C, as measured according to ASTM D3418 standards.

According to one embodiment of the present disclosure, the maleic anhydride modified polyolefin elastomer preferably can have a melt index value of about 1.3 g/10min to about 2.0 g/10min, more preferably about 1.5 g/10min to about 2.0 g/10min, or about 1.5 g/10min to about 2.0 g/10min, as measured at 190°C and 21.6 kg according to ASTM D1238 standards.

According to one embodiment of the present disclosure, the maleic anhydride modified polyolefin elastomer can have a maleic anhydride graft ratio of more than 0 wt.% and less than 1 wt.%, or about 0.1 wt.% to about 0.9 wt.%, or about 0.3 wt.% to about 0.7 wt.%.

On the other hand, according to one aspect of the present disclosure, provided is a biodegradable resin molded article comprising the above-mentioned resin composition.

In addition, the resin composition according to an embodiment of the present disclosure can further include other additives. As the additive, a general additive used at the time of molding the resin composition in the technical field to which the present disclosure belongs, that is, in the field of thermoplastic polymer, can be used without particular limitation.

The additive can include an inorganic filler, an organic filler, a heat stabilizer, a UV stabilizer, and the like.

Further, the additive can be contained in an amount of about 1 to about 30 parts by weight based on 100 parts by weight of a total of the polybutylene adipate terephthalate (PBAT) and polylactic acid.

Further, the biodegradable resin molded article can be a biodegradable film.

According to one embodiment of the present disclosure, the biodegradable resin molded article can have a tensile strength value of about 250 kg/cm² to about 500 kg/cm², or about 250 kg/cm² to about 400 kg/cm², or about 300 kg/cm² to about 400 kg/cm², or about 350 kg/cm² to about 380 kg/cm², as measured according to ISO 527 standards, which can be very excellent tensile strength values.

Further, according to one embodiment of the present disclosure, the biodegradable resin molded article can have an elongation value of about 200% to about 600%, or about 300% to about 500%, or about 300% to 400%, as measured according to ISO 527 standards, which can be very excellent elongation values.

Due to such mechanical properties, the biodegradable resin molded article according to an embodiment of the present disclosure can be used for applications such as agricultural mulching films.

Further, according to another embodiment, the biodegradable resin molded article can be a hot sealing film.

According to an embodiment of the present disclosure, the biodegradable resin molded article has a hot seal initiation temperature value of about 80°C to about 120°C, or about 100°C to about 120°C, or about 105 °C to about 115 °C, or from about 105 °C to about 110 °C, as measured under 2N conditions according to ASTM F1921 standards. The bonding strength 2N is a minimum bonding strength value for evaluating the hot sealing, and when the bonding strength is 2N or more, it can be considered that hot sealing is achieved without any particular problem. The biodegradable resin molded article according to an embodiment of the present disclosure can implement hot sealing even at a very low temperature compared to the conventional one.

According to another embodiment of the present disclosure, the biodegradable resin molded article can have a seal strength value of about 2N or more, or about 2N to about 10N, or about 2.5N to about 5N days, as measured at about 110°C according to ASTM F1921 standards.

In addition, the biodegradable resin molded article can have a seal strength value of about 3N or more, or about 3N to about 10N, or about 4N to about 5N, as measured at about 114°C according to ASTM F1921 standards.

As described above, the biodegradable resin molded article according to an embodiment of the present disclosure can realize a high seal strength value even at a very low temperature as compared with a conventional one.

### Advantageous Effects

The resin composition of the present disclosure can provide a resin product such as a hot sealing film or a hot sealing bag that is excellent in biodegradability and can realize high seal strength even at low temperatures during hot sealing.

### EXAMPLES

Hereinafter, the actions and effects of the present disclosure will be described in more detail with reference to the specific exemplary embodiments of the present invention. However, these exemplary embodiments are for illustrative purposes only, and the scope of the present invention is not intended to be limited thereby.

### <Examples>

### Information on the sample used

As polybutylene adipate-co-terephthalate, TH801T product (from Tunhe) was prepared.
Melting point: 119°C, melt index (190°C 2.16Kg): 2.7g/10min
As polylactic acid, AI-1001 product (from ESUN) was prepared.
Density: 1.24 g/ cm³, melt index (190°C 2.16Kg): 3.82 g/10min
As a compatibilizer, the following products were used.

### Example: Maleic anhydride acid modified polyolefin elastomer

FUSABOND N493 (maleic anhydride-modified ethylene-1-octene copolymer elastomer, hereinafter, **493**); density: 0.87 g/cm³; melting point: 50°C; freezing point: 28°C; melt index (190°C 21.6 Kg): 1.6 g/10 min; maleic graft ratio: 0.5 wt.%

KT-915 (maleic anhydride-modified ethylene-propylene-diene elastomer, hereinafter, **915**): density: 0.86~0.88 g/cm³; melt index (190°C 2.16Kg): 0.5~1.5 g/lOmin; maleic graft ratio: 1.0 wt.%

### Comparative Example: Maleic anhydride-modified polypropylene

FUSABOND P353 (hereinafter, **353**); density: 0.904 g/cm³; melting point: 132°C; freezing point: 92°C; melt index (190°C 21.6 g): 22.4 g/10 min; maleic graft ratio: 1.3 wt.%

### Comparative Example: Maleic anhydride-modified polyethylene

FUSABOND E100 (hereinafter, **100**); density: 0.954 g/cm³; melting point: 134 °C; freezing point: 115°C; melt index (190°C 21.6 Kg): 2 g/10 min; maleic graft ratio: 0.8 wt.%

FUSABOND E588 (hereinafter, **588**); density: 0.93 g/cm³; melting point: 120°C; freezing point: 102 °C; melt index (190°C 2.16 Kg): 1.75 g/10 min; maleic graft ratio: 0.8 wt.%

### Inorganic Additives:

Calcium carbonate was used as an inorganic additive.

Calcium carbonate: Omya product, Hydrocarb 95T

A resin composition was prepared according to the composition of Table 1 below. Specifically, the PBAT, PLA, and compatibilizer were charged into a twinscrew extruder (32 mm) according to the composition of Table below, and extrusion was performed under conditions of barrel temperature: 200°C, feed: 30 kg/hr, 300 rpm, and the resin composition was prepared in the form of pellets.

The pellets prepared above was molded to a thickness of 0.05 mm at an extrusion temperature of about 160°C to about 170°C using a single screw extruder (Blown Film M/C, 19 pie, L/D=25) to produce a blown film. At this time, the blow-up ratio was set to about 1.8.

**[Table 1]**

| | PBAT (parts by weight) | PLA (parts by weight) | Inorganic additive (parts by weight) | Compatibilizer (parts by weight) |
|---|---|---|---|---|
| Example 1-1 | 80 | 20 | 20 | FUSABOND N493 (0.5) |
| Example 1-2 | 80 | 20 | 20 | KT-915 (0.2) |
| Reference Example 1-1 | 25 | 75 | 20 | FUSABOND N493 (0.5) |
| Reference Example 1-2 | 25 | 75 | 20 | FUSABOND N493 (1.0) |
| Reference Example 1-3 | 25 | 75 | 20 | FUSABOND N493 (5.0) |
| Reference Example 1-4 | 25 | 75 | 20 | FUSABOND N493 (10.0) |

### Measurement of physical properties

### Measurement of tensile strength and elongation

The tensile strength value of the film was measured in accordance with ISO 527 standards using a universal testing machine (manufacturer: Instron, model name: Model 5965).

Specimens were prepared in a bar shape width × length (10mm × 150mm).

### Measurement of hot seal initiation temperature and seal strength

A seal strength value according to a seal temperature was measured using a hot tack tester (manufacturer: Swiss Management, model name: Model 4000) according to ASTM F1921 standards, and a temperature value of 2N was determined as a hot seal initiation temperature value.

The above measurement results are summarized in Table 2 below.

**[Table 2]**

| | Tensile strength (MD, TD; unit: kg/cm²) | Elongation (MD, TD; unit: %) | Hot seal initiation temperature (based on 2N; unit: °C) | Hot seal strength (based on 108 °C, 110 °C, 112 °C, 114 °C; unit: N) |
|---|---|---|---|---|
| Example 1-1 | 363, 299 | 437, 480 | 108 | 2.4, 2.62, 3.23, 4.31 |
| Example 1-2 | 283, 269 | 372, 499 | 112 | 1.88. 1.85, 2.43, 2.02 |
| Reference Example 1-1 | 398 | 2.48, - | 108 | 1.50, 2.03, 3.77, 2.99 |
| Reference Example 1-2 | 389, - | 3.38, - | 106 | 2.06, 2.28, 2.94, 2.74 |
| Reference Example 1-3 | 390, - | 191, - | 116 | 1.48, 1.35, 1.73, 1.47 |
| Reference Example 1-4 | 363, - | 162, - | 122 | 1.30, 1.36, .155, 1.33 |

Referring to Table 2, it can be clearly seen that the resin composition according to Examples of the present disclosure can achieve very high elongation and tensile strength, and at the same time, can realize high bonding strength even at a low temperature during hot sealing.

However, when polylactic acid is contained in an excessive amount as in Reference Examples, the hardness increases, which can cause a problem of a decrease in elongation, and cause a problem that the bonding strength during hot sealing is also decreased.

Meanwhile, the experiment was repeated by changing the types of compatibilizers.

A resin composition was prepared according to the composition of Table 3 below. Specifically, 80 parts by weight of the PBAT, 20 parts by weight of PLA, 20 parts by weight of an inorganic additive, and a compatibilizer were added to a twinscrew extruder (32mm) according to the composition of Table 3 below, and extrusion was performed under the conditions of barrel temperature: 200°C, feed: 30 kg/hr and 300 rpm to prepare a resin composition in the form of pellets.

The pellet prepared above was molded to a thickness of 0.05 mm at an extrusion temperature of about 160°C to about 170°C using a single screw extruder (Blown Film M/C, 19 pie, L/D=25) to produce a blown film. At this time, the blow-up ratio was set to about 1.8.

The above measurement results are summarized in Tables 4 and 5 below.

**[Table 3]**

| | Type of compatibilizer | Part by weight |
|---|---|---|
| Comparative Example 2-1 | - | 0 |
| Comparative Example 2-2 | 353 | 0.5 |
| Comparative Example 2-3 | | 1 |
| Comparative Example 2-4 | | 3 |
| Comparative Example 2-5 | 100 | 0.5 |
| Comparative Example 2-6 | | 1 |
| Comparative Example 2-7 | | 3 |
| Comparative Example 2-8 | 588 | 0.5 |
| Comparative Example 2-9 | | 1 |
| Comparative Example 2-10 | | 3 |

**[Table 4]**

| | Tensile strength kg/cm² | Elongation % | Hot seal initiation temperature (based on 2N; unit: °C) | Hot heat strength (unit: N) | | | |
|---|---|---|---|---|---|---|---|
| | | | | 114°C | 116°C | 118°C | 120°C |
| Comparative Example 2-1 | 303 | 334 | 118 | 1.83 | 1.75 | 2.72 | 3.17 |
| Comparative Example 2-2 | 271 | 295 | 118 | 1.64 | 1.61 | 2.11 | 2.29 |
| Comparative Example 2-3 | 263 | 299 | 120 | 1.46 | 1.62 | 1.92 | 2.45 |
| Comparative Example 2-4 | 257 | 266 | - | - | - | - | - |
| Comparative Example 2-5 | 275 | 327 | 118 | 1.63 | 1.85 | 2.1 | 2.19 |
| Comparative Example 2-6 | 279 | 321 | 118 | 1.33 | 1.89 | 2.11 | 2.28 |
| Comparative Example 2-7 | 269 | 292 | - | - | - | - | - |
| Comparative Example 2-8 | 273 | 310 | 120 | 1.34 | 1.83 | 1.96 | 2.18 |
| Comparative Example 2-9 | 264 | 321 | 116 | 1.79 | 2.24 | 2.22 | 2.41 |
| Comparative Example 2-10 | 269 | 290 | - | - | - | - | - |

Referring to Table 3, it can be confirmed that in Comparative Example 2-1 in which no compatibilizer was used, or in other Comparative Examples in which maleic anhydride-modified polyolefin-based compatibilizer was used instead of the maleic anhydride-modified polyolefin elastomer, the mechanical properties are inferior to those of the Examples, the hot seal initiation temperature is quite high, and the hot seal strength value within the same temperature is also very low.

## Claims

1. A resin composition, comprising: a polybutylene adipate terephthalate (PBAT), a polylactic acid (PLA), and a maleic anhydride modified polyolefin elastomer.

2. The resin composition according to claim 1, wherein the maleic anhydride modified polyolefin elastomer is an ethylene-alpha olefin copolymer grafted with maleic anhydride.

3. The resin composition according to claim 1, wherein the ethylene-alpha olefin copolymer is one or more selected from the group consisting of ethylene-1-butene copolymer, ethylene-1-pentene copolymer, ethylene-1-hexene copolymer, ethylene-1-heptene copolymer, and ethylene-1-octene copolymer.

4. The resin composition according to claim 1, which contains the polylactic acid in an amount of 1 to 50 parts by weight based on 100 parts by weight of the polybutylene adipate terephthalate (PBAT).

5. The resin composition according to claim 1, which contains the maleic anhydride modified polyolefin elastomer in an amount of 0.01 to 10 parts by weight based on 100 parts by weight of a total of the polybutylene adipate terephthalate (PBAT) and polylactic acid.

6. The resin composition according to claim 1, which contains the maleic anhydride modified polyolefin elastomer in an amount of 0.01 to 10 parts by weight based on 100 parts by weight of the polybutylene adipate terephthalate (PBAT).

7. The resin composition according to claim 1, wherein the maleic anhydride modified polyolefin elastomer has a melting point of 40°C to 60°C, and a freezing point of 20°C to 35°C, as measured according to ASTM D3418 standards.

8. The resin composition according to claim 1, wherein the maleic anhydride modified polyolefin elastomer has a melt index value of 1.3 g/lOmin to 2.0 g/lOmin as measured at 190°C and 21.6 kg according to ASTM D1238 standards.

9. The resin composition according to claim 1, wherein the maleic anhydride modified polyolefin elastomer has a maleic anhydride graft ratio of more than 0 wt.% and less than 1 wt.%.

10. A biodegradable resin molded article comprising the resin composition as set forth in any one of.

11. The biodegradable resin molded article according to claim 10, wherein the biodegradable resin molded article is a biodegradable film.

12. The biodegradable resin molded article according to claim 10, which has a tensile strength value of 250 to 500 kgf/cm² as measured according to ISO 527 standards.

13. The biodegradable resin molded article according to claim 10, which has an elongation value of 200 to 600% as measured according to ISO 527 standards.

14. The biodegradable resin molded article according to claim 10, which is a hot sealing film.

15. The biodegradable resin molded article according to claim 10, which has a hot seal initiation temperature value of 80°C to 120°C as measured under 2N according to ASTM F1921 standards.

16. The biodegradable resin molded article according to claim 10, which has a seal strength value 2N or more as measured at 110°C according to ASTM F1921 standards.

17. The biodegradable resin molded article according to claim 10, which has a seal strength value of 3N or more as measured at 114°C according to ASTM F1921 standards.
